Europäisches Patentamt

European Patent Office

Office européen des brevets

(11) Veröffentlichungsnummer: **0 162 276**

**A2**

# (12) EUROPÄISCHE PATENTANMELDUNG

(21) Anmeldenummer: 85104527.8

(22) Anmeldetag: 15.04.85

(51) Int. Cl.⁴: **C 04 B 28/06**
C 04 B 28/04, C 04 B 40/06
C 04 B 41/00, E 04 G 23/08
//(C04B28/06, 22:04, 22:06,
22:08, 24:00), (C04B28/04,
14:10, 22:04, 22:06, 22:08,
24:00)

(30) Priorität: 18.04.84 CH 1985/84

(43) Veröffentlichungstag der Anmeldung:
27.11.85 Patentblatt 85/48

(84) Benannte Vertragsstaaten:
AT BE CH DE FR GB IT LI LU NL SE

(71) Anmelder: Katrock AG
Alpenstrasse 14
CH-6300 Zug(CH)

(72) Erfinder: Karam, Nabih
P.O. Box 1731
Riyadh(SA)

(72) Erfinder: Meisser, Jacob
Bahnhofstrasse 10
CH-7260 Davos-Dorf(CH)

(72) Erfinder: Spicka, Georg
Weiherweg 9
A-6714 Nüziders(AT)

(74) Vertreter: Patentanwälte Schaad, Balass & Partner
Dufourstrasse 101 Postfach
CH-8034 Zürich(CH)

(54) Durch Wasser aktivierbares Expansionsmittel.

(57) Das Expansionsmittel besteht aus einem Zweikomponentensystem. Die erste Kompenente enthält ein Calziumaluminat enthaltendes Zement und gebrannten, vorzugsweise gemahlenen Kalk. Die zweite Komponente enthält einen Verflüssiger und einen Abbindeverzögerer in wässriger Zubereitung. Weiterhin ist in einer de beiden Komponenten eine katalytisch worksame Substanz enthalten.

Das Expansionsmittel wird anstelle von Sprenstoff zum Trennen, Spalten und Lockern von natürlichen Gesteinen, Beton und ähnlichem verwendet.

## Durch Wasser aktivierbares Expansionsmittel

Die Erfindung betrifft ein durch Wasser aktivierbares Expansionsmittel gemäss dem Oberbegriff von Anspruch 1.

Expansionsmittel auf der Basis von hydraulischen Bindemitteln, welche zum Abtrennen, Lockern, Zerstören und dergleichen von natürlichen und künstlichen Gebilden aus Steinen, Beton etc. anstelle von Explosivstoffen eingesetzt werden, haben gegenüber den letztgenannten verschiedene Vorteile. Sie entwickeln während des Aushärtens durch Volumenvergrösserung des in ihnen enthaltenen hydraulischen Bindemittels nach der Aktivierung durch Wasserzugabe Druckkräfte, die, gezielt eingesetzt, eine Sprengwirkung ohne Detonation, d.h. ohne Lärm und ohne Erschütterung, erzielen. Ausserdem sind sie gefahrlos bei der Herstellung, beim Transport und bei der Lagerung. Nach Erfüllung ihrer Funktion zerfallen sie in ein Pulver, ohne sich mit dem gesprengten Material zu verbinden und ohne letzteres zu verunreinigen. Allerdings werden ihre Verwendungsmöglichkeiten durch den von ihnen entwickelten geringen Expansionsdruck stark eingeschränkt bzw. aus wirtschaftlichen Gründen in Frage gestellt. Deshalb wurde versucht, wie es in den JP-PSen 8079-071 und 8079-072 beschrieben wird, die Druckkraft durch Zugabe von Ligninsulfonat als Verflüssiger bei der Herstellung des aus einem Calziumaluminat und gebranntem Kalk bestehenden Expansionsmittels zu erhöhen. Allerdings wurden auch dadurch nur Druckwerte in der Grössenordnung von bis zu 250 kg/cm$^2$ erhalten.

Ausserdem wird die Wirkung der bekannten Expansionsmittel durch die am Ort der Anwendung herrschenden Bedingungen,

A 5086 EP
12.04.1985 Mz/ab

z.B. Temperatur, Sonneneinstrahlung und die Qualität des zur Verfügung stehenden Wassers und der Art, z.B. Kristallinität des zu trennenden Materials, stark beeinflusst. Lange Abbindezeiten bilden ein weiteres Problem bei der Verwendung des bekannten Expansionsmittels.

Aufgabe der vorliegenden Erfindung war es daher, ein Expansionsmittel der eingangs genannten Art vorzuschlagen, mit dem grössere Expansionsdrücke erzielt werden.

Diese Aufgabe wird durch die Merkmale des kennzeichnenden Teils von Anspruch 1 gelöst.

Es wurde überraschendenweise gefunden, dass jene Wirkung, die durch die Zugabe eines Verflüssigers zum Einkomponentensystem nicht zu erzielen war, mit dem erfindungsgemässen Zweikomponentensystems, dessen erste Komponente das hydraulische Bindemittel, nämlich Calziumaluminat enthaltenden Zement und den gebrannten Kalk, dessen zweite Komponente eine Kombination des Verflüssigers mit einem Verzögerer in wässriger Zubereitung und eine der beiden Komponenten eine katalytisch wirksame Substanz enthält, erreicht werden konnte. Mit diesem Zweikomponentensystem können mühelos Expansionsdrucke von weit über 600 kg/cm$^2$ erzielt werden.

Da die für die Aktivierung des erfindungsgemässen Systems erforderliche Wassermenge bedeutend unterhalb der für übliche Expansionsmittel erforderlichen Wassermenge liegt, genügt im allgemeinen das bereits in der zweiten Komponente enthaltene Wasser, welches von gleichbleibender Qualität ist. Mithin ist das bisher beim Einsatz von Expansionsmitteln als schwerwiegend erachtete Problem der variierenden Wasserqualität gelöst worden.

Weiterhin wird es durch die gezielte, von der Hauptkomponente getrennte, Kombination des Verflüssigers mit dem Verzögerer möglich, für verschiedene klimatische Bedingungen (Temperatur), Abbindezeiten und verschiedene zu sprengende Objekte, massgeschneiderte Systeme herzustellen. Beispielsweise kann ein erfindungsgemässes Expansionsmittel bei 18° bis 20°C in 1 bis 4 Stunden, bei 10° bis 15°C 4 bis 8 Stunden und bei 25° in 1 bis 2 Stunden seine volle Wirksamkeit entwickeln.

Das erfindungsgemässe Zweikomponentensystem ist problemlos und ohne Unterschied in allen Gesteinen, unabhängig von deren Kristallinität, einsetzbar. Sein Abbinden erfolgt unter Wärmeentwicklung und in relativ kurzer Zeit in der Grössenordnung von Stunden.

Bei der Verwendung des erfindungsgemässen Zweikomponentensystems kann mit einem Wassermischungswert von weit unterhalb des bisher üblichen Wassermischungswertes von 0,5 gearbeitet werden. Dieser Wert kann erfindungsgemäss bis auf 0,2 gesenkt werden. Unter dem Wassermischungswert wird das Gewichtsverhältnis Wasser/pulverförmiges Bindemittel angegeben.

Die beiden Komponente können noch weitere Substanzen zur gezielten Beeinflussung der Anwendungseigenschaften des erfindungsgemässen Zweikomponentensystems enthalten. Beispielsweise kann die erste Komponente zusätzlich Aluminiumoxyd zur Verbesserung der Festigkeit des erhärtenden Expansionsmittels enthalten. Weiterhin kann eine kleine Menge eines oberflächenaktiven Mittels zur Erleichterung der Vermengung beider Komponente zugegeben werden.

Als beim Abbinden katalytisch wirksame Substanz können in der ersten Komponente geringe Mengen feinverteiltes metallisches Aluminium oder Magnesiumsulfat und/oder in der zweiten wässrigen Komponente ein oder mehrere Metallsalz(e) von insbesondere Schwermetallen, z.B. Kupfer-, Chrom-, Eisen- und Cobaltsalze, z.B. Oxyde, Chromate und Silicate, insbesondere Kaliumcobaltsilicat, eingesetzt werden. Wenn die in der zweiten, wässrigen Komponente eingesetzten Verbindungen nicht ausreichend wasserlöslich sind, liegen sie als stabile Suspensionen vor.

Unter dem Ausdruck "Calziumaluminat enthaltender Zement" wird bevorzugt Tonerdezement, ein frühhochfester Zement oder Quellzement verstanden. Tonerdezement enthält im allgemeinen >30 % $Al_2O_3$, wie z.B. ciment fondu. Der gebrannte Kalk stellt ein weiteres hydraulisches Bindemittel dar und liegt vorzugsweise in gemahlener Form vor. Seine Qualität ist nicht kritisch, so kann auch mit Koks gebrannter Kalk problemlos verwendet werden.

Der Verflüssiger und der Verzögerer können je aus einer einzigen oder aus mehreren Substanzen, je nach den spezifischen Anforderungen, bestehen. Als Verflüssiger eignen sich wasserlösliche oder in Wasser fein-dispergierbare Harzkondensate, Melasse, Naphthalinsulfonat, Ligninsulfonat, ein Gluconat und dergleichen. Als Verzögerer können unter anderem verwendet werden: Alkalisulfit, Hydroxycarbonsäuren und deren Salze, Tetrakaliumpyrophosphat und Cellulosederivate, insbesondere Celluloseäther.

Die Erfindung wird anhand der nachfolgenden Beispiele weiter veranschaulicht.

## Beispiel 1

Das nachfolgende Zweikomponentensystem wird hergestellt:

### Komponente 1

25 kg Tonerdezement

45 kg gebrannter Kalk, gemahlen

10 kg Aluminiumoxyd  und

 1 kg Ligninsulfonat

werden mit Spuren von Aluminiumschliff in einer Mischtrommel unter trockenen Bedingungen vermischt.

### Komponente 2

25 kg Wasser

 5 kg Melamin-Formaldehydharz

10 kg Natriumsulfat  und

0,5 kg Zitronensäure

werden unter Rühren in ein Gefäss eingebracht und bis zur Homogenisierung gerührt.

Komponente 1 und 2 werden im Verhältnis 2:1 während 30 Sekunden zu einer dickflüssigen Masse vermischt und in die vorbereiteten Bohrlöcher gegossen. Die Bohrlöcher werden mit einem Holzkeil derart verschlossen, dass das beim Abbinden expandierende Material nicht austreten kann.

## Beispiel 2

Das nachfolgende Zweikomponentensystem wird   hergestellt:

## Komponente 1

30 kg Tonerdezement

50 kg gebrannter Kalk, gemahlen

 6 kg Aluminiumoxyd    und

 6 kg Magnesiumsulfat.

## Komponente 2

60 kg Wasser

20 kg Melamin-Formaldehydharz

28 kg Natriumsulfat und

 2 kg Weinsäure.

Die Herstellung der Komponenten (von Komponente 1 mit Aluminiumschliff), ihre Vermischung und ihr Einsatz erfolgen wie im Beispiel 1 beschrieben, jedoch wird anstelle des Holzkeils ein duroplastischer Kunststofformkörper verwendet.

## Beispiel 3

Das nachfolgende Zweikomponentensystem wird hergestellt:

## Komponente 1

35 bis 40 kg Quellzement

55 kg   gebrannter Kalk, gemahlen

 6 bis 12 kg Aluminiumoxyd

 2 kg   Ligninsulfonat   und

Spuren von Aluminiumschliff.

Komponente 2

40 kg Wasser

10 kg Kaliumnatriumtartarat

 4 kg Melasse    und

10 kg Naphthalinsulfonat.

Die Herstellung der Komponenten, ihre Vermischung und ihr Einsatz erfolgt gemäss Beispiel 1.

Beispiel 4

Das nachfolgende Zweikomponentensystem wird hergestellt:

Komponente 1

28 kg Tonerdezement

55 kg gebrannter Kalk, gemahlen

10 kg Aluminiumoxyd

 1 kg Ligninsulfonat  und

Spuren von Aluminiumschliff.

Komponente 2

60 kg Wasser

20 kg Kaliumnatriumtartarat

 8 kg Melasse  und

20 kg Naphthalinsulfonat.

Beispiel 5

Das nachfolgende Zweikomponentensystem wurde hergestellt:

Komponente 1

37 kg   Quellzement

33 kg   gebrannter Kalk, gemahlen

 3 kg   Magnesiumsulfat oder Magnesiumoxyd

 1 kg   Ligninsulfonat   und

Spuren von Aluminiumschliff.


Komponente 2

20 kg   Naphthalinsulfonat oder Melaminformaldehydharz

 4 kg   Wein- oder Zitronensäure

 8 kg   Ligninsulfonat   und

40 kg   Wasser.


Die Herstellung der Komponenten, ihre Vermischung und ihr Einsatz erfolgt gemäss Beispiel 1.


Beispiel 6

a) Komponente 1

50 bis 65% gebrannter Kalk, Feinheit 0 bis 3 mm

 5 bis 18% Portlandzement (PC-350)

0,5 bis  1% Bentonit, modifiziert mit alkalischen Metallen

 1 bis  2% Aluminiumoxyd.


Komponente 2

20 bis   22% Wasser

0,20 bis 0,50% Kalium-, Natrium-, Magnesiumchromat

 1 bis   3% Tetrakaliumpyrophosphat

 1 bis   3% Gluconat.

b) Zusammensetzung der Komponenten wie unter a), jedoch mit wasserlöslichem Kupferoxid ($Cu_2O$) als Katalysator

c) Zusammensetzung der Komponenten wie unter a), jedoch mit Kaliumcobaltsilicat als Katalysator.

d) Zusammensetzung der Komponenten wie unter a), jedoch mit Eisenglyzerinphosphat, $Fe_2\{[(C_3H_5)OH]OPO_3\}_3$ als Katalysator.

Das Mischungsverhältnis von Komponente 1 zu 2 beträgt 2 bis 3 : 1.

Beispiel 7

Komponente 1

50 bis 65% gebrannter Kalk, Feinheit 0 bis 3 mm

5 bis 18% Portlandzement (PC-350)

0,5 bis 1% Bentonit, modifiziert mit alkalischen Metallen

1 bis 2% Aluminiumoxyd

Komponente 2

20 bis 22% Wasser

1 bis 3% Holzharzderivate

0,5 bis 1% Diäthanolamin

1 bis 3% Gluconat

0,1 bis 0,3% Eisengluconat

Das Mischungsverhältnis von Komponente 1 zu 2 beträgt 7 : 3.

Die optimale Zusammensetzung der gut lagerfähigen Komponenten kann vom Fachmann anhand seiner Erfahrung und von Vorversuchen auf die jeweiligen klimatischen Bedingungen und auf die zu bearbeitenden Materialien eingestellt werden.

Wie in den Beispielen gezeigt wurde, brauchen erfindungsgemäss die bisher erforderlichen Holzleisten nicht in die Bohrlöcher hineingestellt zu werden, sondern es genügt, mit einem im obersten Bereich des Bohrloches wirksamen Formkörper, z.B. Holzkeil, das Expansionsmittel am Anfang des Abbindens am Herausquellen zu hindern. Das zuerst an der Lochöffnung erhärtende Expansionsmittel verhindert danach das spätere Austreten der Masse und ein Verdampfen des Wasseranteils.

Mit dem erfindungsgemässen Zweikomponentensystem, in dem der grösste Teil der löslichen Substanzen gelöst, d.h. in aktivierter Form vorliegt, können infolge einer schnellen und vollständigen Hydratation ein kleineres Wasserzementverhältnis und bedeutend höhere Expansionsdrücke erzielt werden. Diese können bis zu 1000 kg/cm$^2$ betragen, was etwa einem mit Dynamit erzielbaren Druck entspricht. Allerdings wird dieser Druck durch das erfindungsgemässe Expansionsmittel nicht schlagartig, sondern über einen Zeitraum entwickelt, so dass weniger Energie als bei Dynamit nutzlos verpufft. Die grosse Druckentwicklung über einen Zeitraum ist besonders bei weichen Gesteinen vorteilhaft, welche zur sogenannten Ballonbildung, d.h. Aufweitung der Bohrlöcher, ohne Trennung des Gesteins neigen. Da ausserdem durch Variieren der Zusammensetzung der einzelnen Komponenten für die jeweiligen Anforderungen massgeschneiderte Systeme hergestellt werden, ist das erfindungsgemässe Expansionsmittel auch wirtschaft in seiner Anwendung.

Die Lagerfähigkeit der Komponente 1 beträgt mindestens 1 Jahr, liegt jedoch im allgemeinen über 2 Jahre und diejenige der Komponente 2 oberhalb 5$^{\circ}$C ist unbeschränkt.

## Patentansprüche

1. Durch Wasser aktivierbares Expansionsmittel, enthaltend ein Calziumaluminat, gebrannten Kalk und einen Verflüssiger, dadurch gekennzeichnet, dass es aus zwei voneinander getrennten, bei der Verwendung miteinander zu vermengenden Komponenten besteht, wobei die erste Komponente einen Calziumaluminat enthaltenden Zement und den gebrannten Kalk und die zweite Komponente den Verflüssiger und einen Abbindeverzögerer in wässriger Zubereitung und mindestens eine der beiden Komponenten eine beim Aktivieren katalytisch wirksame Substanz enthält.

2. Expansionsmittel nach Anspruch 1, dadurch gekennzeichnet, dass die erste Komponente zusätzlich Aluminiumoxid enthält.

3. Expansionsmittel nach Anspruch 1 oder 2, dadurch gekennzeichnet, dass es als beim Aktivieren katalytisch wirksame Substanz feinteiliges Aluminium enthält.

4. Expansionsmittel nach Anspruch 1 oder 2, dadurch gekennzeichnet, dass die zweite Komponente als katalytisch wirksame Substanz ein oder mehrere Metallsalz(e), insbesondere Schwermetallsalz(e), enthält.

5. Expansionsmittel nach einem der vorangehenden Ansprüche, dadurch gekennzeichnet, dass die erste Komponente ein oberflächenaktives Mittel enthält.

6. Expansionsmittel nach einem der vorangehenden Ansprüche, dadurch gekennzeichnet, dass die erste Komponente als Calziumaluminat enthaltenden Zement Tonerdezement oder Quellzement enthält.

7. Expansionsmittel nach einem der vorangehenden Ansprüche, dadurch gekennzeichnet, dass die zweite Komponente als Verflüssiger ein wasserlösliches Kondensationsharz, Melasse, Naphthalinsulfonat, Ligninsulfonat und/oder ein Gluconat enthält.

8. Expansionsmittel nach einem der vorangehenden Ansprüche, dadurch gekennzeichnet, dass die zweite Komponente als Verzögerer Natriumsulfat, eine Hydroxycarbonsäure, deren Salz und/oder ein Cellulosederivat enthält.

9. Expansionsmittel nach einem der vorangehenden Ansprüche, dadurch gekennzeichnet, dass es eine erste Komponente mit 10 bis 35 Gew.-% Tonerdezement oder Quellzement, bis 45 Gew.-% gebranntem Kalk, 6 bis 12 Gew.-% Aluminiumoxid, 1 bis 2 Gew.-% Ligninsulfonat und Spuren von Aluminiumpulver und eine zweite Komponente mit 50 bis 70 Gew.-% Wasser, 10 bis 20 Gew.-% eines Melaminformaldehydharzes oder Naphthalinsulfonat, 20 bis 28 Gew.-% Natriumsulfat und 1 bis 2 Gew.-% Zitronen- oder Weinsäure enthält.

10. Expansionsmittel nach einem der Ansprüche 1 bis 7, dadurch gekennzeichnet, dass es eine erste Komponente mit 25 bis 35 Gew.-% Tonerdezement oder Quellzement, 10 bis 50 Gew.-% gebranntem Kalk, 6 bis 12 Gew.-% Aluminioxid, 1 bis 2 Gew.-% Ligninsulfonat und Spuren von Aluminiumpulver und eine zweite Komponente mit 40 bis 60 Gew.-% Wasser, 15 bis 23 Gew.-% Kaliumnatriumtartarat, 3 bis 4 Gew.-% Melasse, 10 bis 20 Gew.-% Naphthalinsulfonat und 10 bis 15 Gew.-% Ligninsulfonat enthält.

11. Expansionsmittel nach einem der Ansprüche 1 bis 8, dadurch gekennzeichnet, dass es eine erste Komponente mit 5 bis 18 Gew.-% Portlandzement, 50 bis 65 Gew.-% gebranntem Kalk, 0,5 bis 1 Gew.-% alkalisch modifiziertem Bentonit und 1 bis 2 Gew.-% Aluminiumoxid und eine zweite Komponente mit 20 bis 22 Gew.-% Wasser, 2 bis 6 Gew.-% Verzögerer und 0,1 bis 0,3 Gew.-% einer katalytisch wirksamen Schwermetallverbindung enthält.

12. Expansionsmittel nach einem der vorangehenden Ansprüche, dadurch gekennzeichnet, dass sein Wassermischungswert $\leq 0,4$, vorzugsweise 0,2, beträgt.

13. Verwendung des Expansionsmittels nach einem der vorangehenden Ansprüche zum Spalten, Trennen oder Lockern von natürlichen und künstlichen Gebilden aus Stein, Beton und dergleichen, dadurch gekennzeichnet, dass man die beiden Komponenten miteinander vermischt und das Gemisch in, entlang einer vorbestimmten Linie angeordneten, Bohrungen füllt.

14. Verwendung nach Anspruch 13, dadurch gekennzeichnet, dass man nach Abfüllen des Gemisches in die Bohrungen Formkörper zur Lenkung der beim Expandieren auftretenden Kräfte in die Bohrungen einbringt.